# EUROPEAN PATENT APPLICATION

(11) **EP 2 012 491 A1**
(43) Date of publication of application: **07.01.2009**
(21) Application number: 07290834.6
(22) Date of filing: 02.07.2007
(51) Int. Cl.: H04L 29/06, H04L 29/12

(54) **Method of distributing geo-localisation information**

(71) Applicant: Alcatel Lucent, 75008 Paris (FR)
(72) Inventor: Gass, Raymond, 67150 Bolsenheim (FR)
(74) Representative: LOUIS, PÖHLAU, LOHRENTZ

(57) **Abstract**

The invention concerns a method of distributing geo-localisation information associated with an endpoint device (10) of an IP telephony network (100) within said IP telephony network (100), and a LIS (52) of the IP telephony network (100) and a computer program product to execute this method. The IP telephony network (100) further comprises a call management function (63). A virtual LAN connection between the LIS (52) and the call management function (63) is established. The LIS (52) broadcasts said geo-localisation information associated with the endpoint device (10) over said virtual LAN connection. By means of said broadcast, said geo-localisation information associated with the endpoint device (10) is transmitted from the LIS (52) to the call management function (63).

## Description

The present invention relates to a method of distributing geo-localisation information associated with an endpoint device of an IP telephony network within said IP telephony network, and a LIS (= Location Information Server) and a computer program product to execute said method.

The IEEE Standard 802.1AB defines a Link Layer Discovery Protocol (= LLDP) which is designed to provide a multi-vendor solution for the discovery of elements on a data network and how they are connected to each other (IEEE = Institute of Electrical and Electronics Engineers). The LLDP standard allows stations attached to an IEEE 802 LAN to advertise to other stations, attached to the same 802 LAN segment, the functionalities provided by that station (LAN = Local Area Network).

The LLDP-MED is an enhancement to the LLDP that is designed to allow for device location discovery, thus enabling the creation of location databases and - in the case of VoIP - emergency calling services (MED = Media Endpoint Discovery; VoIP = Voice over IP; IP = Internet Protocol). The LLDP-MED protocol was formally approved and published as the standard ANSI/TIA-1057 by the Telecommunications Industry Association (= TIA) in April 2006 (ANSI = American National Standards Institute).

Two kind of devices are part of the LLDP-MED reference model: the network connectivity devices and the endpoint devices. LLDP-MED is one of the solutions that are currently under study for the provision of geo-localisation information to an endpoint device. There is a need to provide to any network connectivity device the geo-localisation address of a telephone/computer jack behind any of its ports. LLDP-MED will be capable of carrying this information to the endpoint device that is connected to the telephone/computer jack, i.e., one of the ports of the network connectivity device.

The TIA is considering LLDP-MED's ECS Endpoint Location Discovery TLV as a method to enable ECS within enterprise networks (ECS = Emergency Calling Services; TLV = Type Length Value). While there are other standards under development, the LLDP-MED method is well suited for use where adds, moves and changes are common. The TLV contains information related to the telephony wire map of a telephone installation network in a certain area, e.g., on a campus, or other attributes that allow for the resolution of the endpoint's exact location. When an endpoint receives a TLV with ECS location data associated with the current location of the endpoint, the endpoint might store and use that data when it needs to communicate with a Public Safety Answering Point (= PSAP). This method ensures an endpoint is capable of discovering accurate location information specifying the endpoint's exact location no matter where it is moved to within the network.

The problems that are faced now, is that any network connectivity device needs to be updated manually when cabling is changed, usually via SNMP. Moreover, when the endpoint device is a WLAN access point, there are no means for advertising a terminal behind it. And, guest users may not be capable of setting up emergency calls.

Besides, there are no specific means currently specified to get the right ELIN and provide ELIN and geo-localisation information to the Call Management Function (ELIN = Emergency Location Identification Number).

It is the object of the present invention to improve the distribution of geo-localisation information within an IP telephony network.

The object of the present invention is achieved by a method of distributing geo-localisation information associated with an endpoint device of an IP telephony network within said IP telephony network, the IP telephony network further comprising a LIS and a call management function, whereby the method comprises the steps of establishing a virtual LAN connection between the LIS and the call management function, broadcasting, by the LIS, said geo-localisation information associated with the endpoint device over said virtual LAN connection, and transmitting, by means of said broadcast, said geo-localisation information associated with the endpoint device from the LIS to the call management function. The object of the present invention is further achieved by a LIS for distributing geo-localisation information associated with an endpoint device of an IP telephony network within said IP telephony network, the IP telephony network comprising the LIS and a call management function, whereby the LIS comprises a control unit adapted to establish a virtual LAN connection between the LIS and the call management function, broadcast said geo-localisation information associated with the endpoint device over said virtual LAN connection, and transmit, by means of said broadcast, said geo-localisation information associated with the endpoint device to the call management function. And the object of the present invention is achieved by a computer program product for distributing geo-localisation information associated with an endpoint device of an IP telephony network within said IP telephony network, the IP telephony network further comprising a LIS and a call management function, whereby the computer program product, when executed by a control unit of the LIS, performs the steps of establishing a virtual LAN connection between the LIS and the call management function, broadcasting, by the LIS, said geo-localisation information associated with the endpoint device over said virtual LAN connection, and transmitting, by means of said broadcast, said geo-localisation information associated with the endpoint device from the LIS to the call management function.

The basic idea of the invention is to advertise geo-localisation information backwards and leave the usage of the geo-localisation information up to the relevant servers. A "LLDP-MED users" VLAN is set up to allow for multicast between endpoints (VLAN = Virtual LAN).

Geo-localisation information may comprise geodesic co-ordinates of a location of the endpoint device, an identifier of a geographic area including the location of the endpoint device, e.g., a district, a sector, a neighbourhood, a block, a building, a street name, etc., an identifier of an area defined for emergency assistance purposes where the location of the endpoint device belongs to, e.g., one or more zones associated with a PSAP, paramedic, etc.

The present invention solves a problem known with the prior-art approaches. In prior-art, geo-localisation information is sent towards a terminal, but there is no agreed solution to give this information back to the Call Management Function. The proposed solution abolishes this deficiency by defining a new, direct link between the LIS and the Call Handling Function, e.g., a Call Management Server.

Thus, the proposed solution brings the missing path to provide geo-localisation data/information to the Call Management Function, e.g., a Call Management Server. Moreover, the proposed solution solves the question how to achieve geo-localisation for an IP terminal in customer premises.

The present invention renders unnecessary a manual update of any network connectivity device when cabling is changed, usually via SNMP (= Simple Network Management Protocol).

The present invention provides a solution for the situation when the endpoint device is a WLAN access point and there are no means for advertising the terminal behind it.

The present invention enable a guest user of a network to set up emergency calls. The call management server/function knows about the geo-localisation of the guest user and can inform the emergency call answering point accordingly. By means of the direct link between the LIS and the call management server/function, only the LIS needs to be updated. The network connectivity device is always up-to-date: it asks the information when needed to the LIS. The call management function is informed via the broadcast of the LIS, e.g., over a VLAN. Thus there is no need for defining a new protocol between the terminal and the call management function.

Further advantages are achieved by the embodiments of the invention indicated by the dependent claims.

Preferably, the invention is used when the endpoint device requests an allocation of a static IP address, e.g., via LLDP-MED.

It is possible that the LIS broadcasts the geo-localisation information by using the LLDP protocol.

According to a preferred embodiment of the invention, the endpoint device is connected to the network by means of a connectivity device. For example, the endpoint device is an IP phone which is connected to a telecommunications network by means of a LAN switch. The connectivity device receives a MAC address associated with the endpoint device via LLDP-MED from the endpoint device. After reception of this MAC address, the connectivity device sends a MAC user information and a port number to the LIS. The LIS receives the MAC user information and the port number and determines a geographic location identifier associated with the received data. After the association, the LIS broadcasts the MAC user information and the geographic location identifier as geo-localisation information associated with the endpoint device over the virtual LAN connection and sends the geo-localisation information via LLDP-MED to the endpoint device.

According to another preferred embodiment of the invention, the endpoint device sends a MAC address as a request to the connectivity device of the endpoint device. The connectivity device appends to the MAC address a port number associated with a port of the connectivity device on which the connectivity device received the MAC address, i.e., the port the endpoint device is connected with.

Preferably, the invention is used when the endpoint device requests an allocation of a dynamic IP address, e.g., via DHCP or via LLDP (DHCP = Dynamic Host Configuration Protocol).

It is possible that the LIS broadcasts the geo-localisation information by using the DHCP protocol.

According to another preferred embodiment of the invention, the a DHCP relay unit forwards a DHCP DISCOVER message from the endpoint device to one or more DHCP servers. The one or more DHCP servers send, in response to the DHCP DISCOVER message, one or more DHCP OFFER messages via said DHCP relay back to the endpoint device. The endpoint device receives the one or more DHCP OFFER messages and determines one of the options offered through the one or more DHCP OFFER messages. The endpoint device sends a DHCP REQUEST message and requests, by means of the DHCP REQUEST message, the determined option. The connectivity device of the endpoint device accesses the DHCP REQUEST message, adds a MAC address and a port number associated with the endpoint device to the DHCP REQUEST and forwards the DHCP REQUEST message to the DHCP relay. The port number associated with the endpoint device is the port number of the port of the connectivity device the endpoint device is connected with. The DHCP relays the DHCP REQUEST with the MAC address and the port number to one or more of the DHCP servers. The DHCP server, which offered the option that was determined/chosen by the endpoint device, sends said port number via MAC /IP to the LIS. The LIS broadcasts the MAC user information and a geographic location identifier as said geo-localisation information associated with the endpoint device over said virtual LAN connection. The DHCP server, which offered the option that was determined/chosen by the endpoint device, sends a DHCP ACK message with an IP address and a parameter specifying a life duration of the IP address to the endpoint device.

These as well as further features and advantages of the invention will be better appreciated by reading the following detailed description of presently preferred exemplary embodiments taken in conjunction with accompanying drawings of which:
- Fig. 1: is a block diagram of an IP network according to an embodiment of the invention.
- Fig. 2: is a message flow sequence in the IP network shown in Fig. 1.
- Fig. 3: is a block diagram of an IP network according to another embodiment of the invention.
- Fig. 4: is a message flow sequence in the IP network shown in Fig. 3.

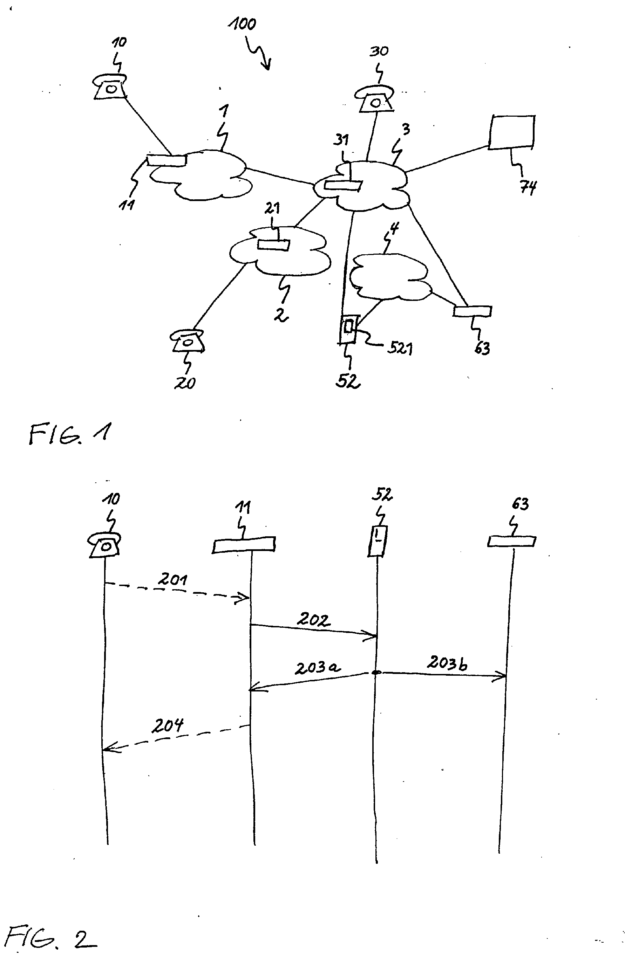

Fig. 1 shows an IP network 100 which is used for the establishment of packet-based telecommunications connections, e.g., telephone calls using VoIP. The IP network 100 is partitioned into IP sub-networks 1 to 4, so-called VLANs, based on functional requirements while maintaining connectivity across all devices on the network 100. Each of the VLANs 1 to 4 has been assigned a unique identifier (= ID), the so-called VLAN ID. For simplicity, it is assumed that the first VLAN 1 has been assigned the VLAN ID = 1, the second VLAN 2 has been assigned the VLAN ID = 2, and so on. The ports that form part of the same VLAN 1 to 4 are assigned the same permanent VLAN lDs.

The VLAN 1 comprises a LAN switch 11 operating in conformity with the LLDP protocol. The LAN switch 11 serves as a LLDP-MED connectivity device for an LLDP-MED endpoint, in particular for an IP phone 10. That means that the LAN switch 11 provides network access to the IP phone 10.

The VLAN 2 comprises a LAN switch 21 operating in conformity with the LLDP protocol. The LAN switch 21 serves as a LLDP-MED connectivity device for an LLDP-MED endpoint, in particular for a second IP phone 20. That means that the LAN switch 21 provides network access to the IP phone 20.

The VLAN 3 comprises a LAN switch 31 operating in conformity with the LLDP protocol. The LAN switch 31 serves as a LLDP-MED connectivity device for an LLDP-MED endpoint, in particular for a third IP phone 30. That means that the LAN switch 31 provides network access to the IP phone 30.

Furthermore, the IP network 100 comprises a LIS 52, a call management function 63, and an enterprise network management workstation 74, all of them connected to the VLAN 3 (LIS = Location Information Server). Additionally, the LIS 52 and the call management function 63 are connected to the VLAN 4, too.

The LIS 52 comprises a control unit 521 controlling the function of the LIS 52 according to the present invention, e.g., for the transmission of geo-localisation information to the call management function 63.

The LIS 52 is composed of one or several interlinked computers, i.e., a hardware platform, a software platform basing on the hardware platform and several application programs executed by the system platform formed by the software and hardware platform. The functionalities of the LIS 52 are provided by the execution of these application programs. The application programs or a selected part of these application programs constitute a computer software product providing data distribution service as described in the following, when executed on the system platform. Further, such computer software product is constituted by a storage medium storing these application programs or said selected part of application programs.

Form a functional point of view, the LIS 52 comprises an interface for communication with other network nodes, e.g., for receiving and sending data and signalling packets, and a control unit 521 for controlling the function of the LIS 52 according to the present invention, e.g., for the transmission of geo-localisation information to the call management function 63.

Fig. 2 shows a message flow sequence with reference to the network 100 shown in Fig. 1. The message flow sequence comprises the first IP phone 10, the LAN switch 11, the LIS 52, and the call management function 63, each of these devices in an embodiment as aforementioned with reference to Fig. 1. Unicast messages are indicated by dashed arrows, broadcast messages by solid arrows.

In a first step, the IP phone 10 sends a unicast message 201 conforming to the LLDP-MED protocol to the connectivity device 11 whereby the message 201 comprises a MAC address associated with the IP phone 10 (MAC = Media Access Control). Triggered by the message 201, the connectivity device 11 broadcasts 202 a user identifier and a port number associated with the MAC address in the VLAN 3.

The broadcast message 202 is received via the VLAN 3 by the LIS 52. The LIS 52 broadcasts 203a, 203b the user identifier associated with the MAC address and the location ID of the IP phone 10. This broadcast 203a, 203b is received by the connectivity device 11 and by the call management function 63. The connectivity device 11 sends a unicast message 204 conforming to the LLDP-MED protocol to the IP phone 10 whereby the message 204 comprises the location ID of the IP phone 10.

This way, both the IP phone 10 and the call management function 63 are provided with the location ID of the IP phone 10.

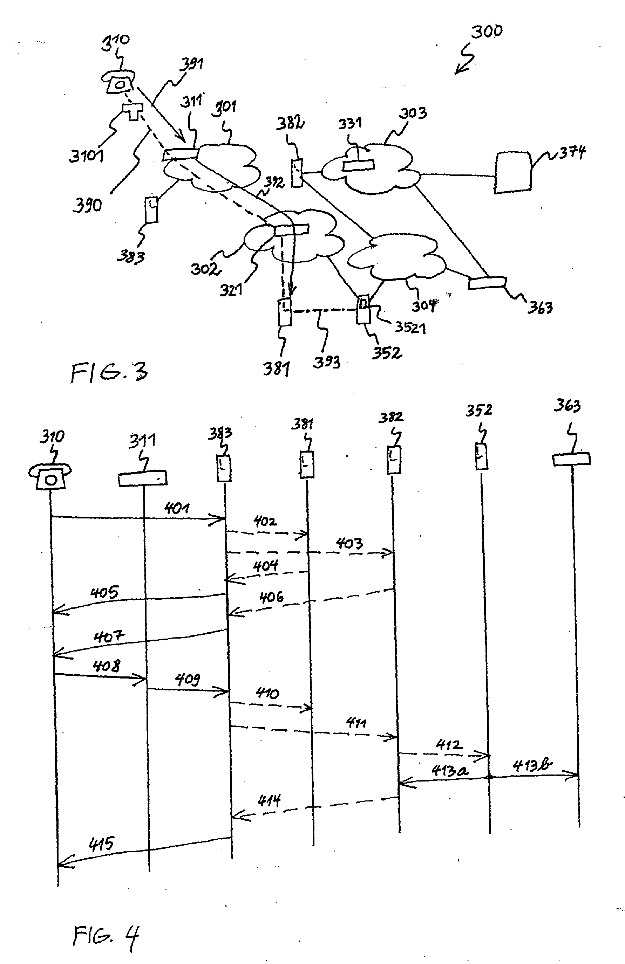

Fig. 3 shows an IP network 300 which is used for the establishment of packet-based telecommunications connections, e.g., telephone calls using VolP. The IP network 300 is partitioned into IP sub-networks 301 to 304, so-called VLANs, based on functional requirements while maintaining connectivity across all devices on the network 300. Each of the VLANs 301 to 304 has been assigned a VLAN ID. For simplicity, it is assumed that the first VLAN 301 has been assigned the VLAN ID = 1, the second VLAN 302 has been assigned the VLAN ID = 2, and so on. The ports that form part of the same VLAN 301 to 304 are assigned the same permanent VLAN IDs.

The VLAN 301 comprises a LAN switch 311 operating in conformity with the LLDP protocol. The LAN switch 311 serves as a LLDP-MED connectivity device for an LLDP-MED endpoint, in particular for an IP phone 310. That means that the LAN switch 311 provides network access to the IP phone 310. The IP phone 310 is connected to the VLAN 301 through a telephone/computer jack 3101, e.g. a RJ45 (RJ = Registered Jack). A DHCP relay 383 is connected to the VLAN 301.

The VLAN 302 comprises a LAN switch 321 operating in conformity with the LLDP protocol. The telephone/computer jack 3101 is connected to a port of the LAN switch 321. The LAN switch 321 is connected to a first DHCP server 381.

The VLAN 303 comprises a LAN switch 331 operating in conformity with the LLDP protocol. The LAN switch 331 is connected to a second DHCP server 382.

Furthermore, the IP network 100 comprises a LIS 352 with a control unit 3521. The design and function of the LIS 352 with the control unit 3521 corresponds to the design and function of the aforementioned LIS with the control unit described with reference to Fig. 1. The IP network 100 also comprises a call management function 363 and an enterprise network management workstation 374, both of them connected to the VLAN 303. Additionally, the LIS 352 and the call management function 363 are connected to the VLAN 304, too.

Fig. 4 shows a message flow sequence with reference to the network 300 shown in Fig. 3. The message flow sequence comprises the IP phone 310, the LAN switch 311, the DHCP relay 383, the first DHCP server 381, the second DHCP server 382, the LIS 352, and the call management function 363, each of these devices in an embodiment as aforementioned with reference to Fig. 3. Unicast messages are indicated by dashed arrows, broadcast messages by solid arrows.

The DHCP protocol is used to allocate an IP address to a device. DHCP is usually used in LAN environments, where the IP addresses are issued by a central address server, a DHCP server.

In a first step, the IP phone 10 sends a DISCOVER broadcast message 401 conforming to the DHCP protocol to the DHCP relay 383. By means of the DISCOVER broadcast message 401, the IP phone 10, currently being without IP address, requests IP address offers from a DHCP server. The DHCP DISCOVER broadcast message 401 comprises a MAC address associated with the IP phone 10.

Triggered by the message 201, the DHCP relay 383 broadcasts a DISCOVER message 402 to the first DHCP server 381 and a DISCOVER message 403 to the second DHCP server 382. The first DHCP server 381 responds with a first DHCP OFFER unicast message 404 to the DHCP relay 383, which is forwarded by the DHCP relay 383 as a broadcast first OFFER message 405 to the IP phone 310. The second DHCP server 382 responds with a second DHCP OFFER unicast message 406 to the DHCP relay 383, which is forwarded by the DHCP relay 383 as a broadcast second OFFER message 407 to the IP phone 310. The DHCP OFFER messages comprise one or more IP address offers corresponding to the DHCP DISCOVER messages.

It is assumed that the IP phone 310 chooses an IP address offered by the second DHCP server 382. Accordingly, the IP phone 310 sends a broadcast DHCP REQUEST message 408 with option #82 to the LAN switch 311. By means of the DHCP REQUEST message 408, the client, i.e., the IP phone 310, requests one of the offered IP addresses from the DHCP server 382 offering the IP address.

By means of the option #82 "Relay Agent Information" (cf. Request for Comments-Document RFC 3046 "DHCP Relay Agent Information Option"), the DHCP server 382 can unambiguously assign an IP address deposited at the DHCP server 382 to a client. The DHCP server 382 can definitely identify the IP phone 310 requesting an IP address by means of a port of the LAN switch 311, represented by the telephone/computer jack 3101. The option #82 may be compared to an identification by means of a MAC address. The option #82 has the advantage that the identification of the IP phone 310 takes place on layer 3 of the OSI model and therefore is supported by the IP protocol (OSI = Open Systems Interconnection).

The LAN switch 311 adds the port number of the port where the line to the IP phone 310 (via the telephone/computer jack 3101) is connected to at the LAN switch 311 to the DHCP REQUEST message and sends a broadcast DHCP REQUEST message 409 to the DHCP relay 383.

The DHCP relay 383 sends a unicast DHCP REQUEST message 410 to the first DHCP server 381 and a unicast DHCP REQUEST message 411 to the second DHCP server 382. The second DHCP server 382 sends a unicast message 412 comprising the port number to the LIS 352.

The message 412 is received via the VLAN 304 by the LIS 352. The LIS 352 broadcasts 413a, 413b the user identifier associated with the MAC address, the user identifier associated with the IP address, and the geo-localisation ID of the IP phone 310. This broadcast 413a, 413b is received by the second DHCP server 382 and by the call management function 363. Thus, the call management function 363 receives geo-localisation information associated with the IP phone 310 on a direct link from the LIS 352.

The second DHCP server 382 sends a unicast DHCP ACK message 414 conforming to the DHCP protocol to the DHCP relay 383. By means of the DHCP ACK message 414, the second DHCP server 382 acknowledges the DHCP REQUEST message 411. The DHCP ACK message 414 comprises the IP address of the IP phone 310 and an indicator of a life duration associated with the IP address.

The DHCP relay 383 broadcasts an ACK message 415 conforming to the DHCP protocol whereby the message 415 comprises the IP address of the IP phone 310 and the indicator of the life duration associated with the IP address. The DHCP ACK message 415 is received by the IP phone 310.

## Claims

1. A method of distributing geo-localisation information associated with an endpoint device (10, 310) of an IP telephony network (100, 300) within said IP telephony network (100, 300), the IP telephony network (100, 300) further comprising a LIS (52, 352) and a call management function (63, 363),
**characterised in**
**that** the method comprises the steps of:
establishing a virtual LAN connection between the LIS (52, 352) and the call management function (63, 363);
broadcasting (203, 413), by the LIS (52, 352), said geo-localisation information associated with the endpoint device (10, 310) over said virtual LAN connection; and
transmitting, by means of said broadcast (203, 413), said geo-localisation information associated with the endpoint device (10, 310) from the LIS (52, 352) to the call management function (63, 363).

2. The method of claim 1,
**characterised in**
**that** the method comprises the further step of:
allocating a static IP address to the endpoint device (10).

3. The method of claim 1,
**characterised in**
**that** the method comprises the further step of:
broadcasting (203, 413) said geo-localisation information based on the LLDP protocol.

4. The method of claim 1,
**characterised in**
**that** the method comprises the further steps of:
sending, after reception of a MAC address via LLDP-MED from the endpoint device (10, 310), a MAC user information and a MAC port number from a connectivity device (11, 311) of the endpoint device (10, 310) to the LIS (52, 352);
broadcasting (203), by the LIS (52), the MAC user information and a geographic location identifier as said geo-localisation information associated with the endpoint device (10, 310) over said virtual LAN connection; and
transmitting (204) said geo-localisation information via LLDP-MED from the connectivity device (11, 311) to the endpoint device (10, 310).

5. The method of claim 4,
**characterised in**
**that** the method comprises the further step of:
sending (201) a MAC address as a request from the endpoint device (10, 310) to a connectivity device (11, 311) of the endpoint device (10, 310);
appending to the MAC address a port number associated with a port of the connectivity device (11, 311) on which the connectivity device (11, 311) received the MAC address.

6. The method of claim 1,
**characterised in**
**that** the method comprises the further step of:
allocating a dynamic IP address to the endpoint device (10, 310).

7. The method of claim 1,
**characterised in**
**that** the method comprises the further step of:
broadcasting (413) said geo-localisation information based on the DHCP protocol.

8. The method of claim 1,
**characterised in**
**that** the method comprises the further steps of:
forwarding a DHCP DISCOVER message (401, 402, 403) from the endpoint device (10, 310) via a DHCP relay (383) to one or more DHCP servers (381, 382);
sending, from said one or more DHCP servers (381, 382), one or more DHCP OFFER messages (404 to 407) via said DHCP relay (383) to the endpoint device (10, 310);
requesting, by the endpoint device (10, 310) sending a DHCP REQUEST message (408), one of the options offered through the one or more DHCP OFFER messages (404 to 407);
adding to the DHCP REQUEST message (408), by a connectivity device (11, 311) of the endpoint device (10, 310), a MAC address and a port number associated with the endpoint device (10, 310);
forwarding, by the DHCP relay (383), said DHCP REQUEST message with said MAC address and said port number to said one or more DHCP servers (381, 382);
transmitting (412), by one of the DHCP servers (381, 382), said port number via MAC / IP to the LIS (52, 352);
broadcasting (413), by the LIS (52, 352), the MAC user information and a geographic location identifier as said geo-localisation information associated with the endpoint device (10, 310) over said virtual LAN connection; and
transmitting a DHCP ACK message (414, 415) with an IP address and a parameter specifying a life duration of the IP address from one of the DHCP servers (381, 382) to the endpoint device (10, 310).

9. A LIS (52, 352) for distributing geo-localisation information associated with an endpoint device (10, 310) of an IP telephony network (100, 300) within said IP telephony network (100, 300), the IP telephony network (100, 300) comprising the LIS (52, 352) and a call management function (63, 363),
**characterised in**
**that** the LIS (52, 352) comprises a control unit (521, 3521) adapted to establish a virtual LAN connection between the LIS (52, 352) and the call management function (63, 363), broadcast (203, 413) said geo-localisation information associated with the endpoint device (10, 310) over said virtual LAN connection, and transmit, by means of said broadcast (203, 413), said geo-localisation information associated with the endpoint device (10, 310) to the call management function (63, 363).

10. A computer program product for distributing geo-localisation information associated with an endpoint device (10, 310) of an IP telephony network (100, 300) within said IP telephony network (100, 300), the IP telephony network (100, 300) further comprising a LIS (52, 352) and a call management function (63, 363),
**characterised in**
**that** the computer program product, when executed by a control unit (521, 3521) of the LIS (52, 352), performs the steps of:
establishing a virtual LAN connection between the LIS (52, 352) and the call management function (63, 363);
broadcasting (203, 413), by the LIS (52, 352) said geo-localisation information associated with the endpoint device (10, 310) over said virtual LAN connection; and
transmitting, by means of said broadcast (203, 413), said geo-localisation information associated with the endpoint device (10, 310) from the LIS (52, 352) to the call management function (63, 363).
